# EUROPÄISCHE PATENTANMELDUNG

(11) **EP 2 618 550 A2**
(43) Veröffentlichungstag der Anmeldung: **24.07.2013**
(21) Anmeldenummer: 13151763.3
(22) Anmeldetag: 18.01.2013
(51) Int. Cl.: H04M 3/42

(54) **Verfahren zur Kopplung von mobilen Telekommunikationsendgeräten mit einer Telefonanlage oder dem öffentlichen Netz**

(30) Priorität: 20.01.2012 DE 102012000965
(71) Anmelder: Henniger, Andreas, 82319 Starnberg (DE)
(72) Erfinder: Henniger, Andreas, 82319 Starnberg (DE)
(74) Vertreter: Limbeck, Achim

(57) **Zusammenfassung**

Die vorliegende Erfindung betrifft ein Verfahren zur Kopplung von Telefonanlagen oder eines mit dem öffentlichen Netzt verbundenen Telefons oder von mindestens einer Nebenstellen einer Telefonanlage oder eines mit dem öffentlichen Netzt verbundenen Telefons mit mindestens einem mobilen Telekommunikationsendgerät, wobei bei Kopplung der Telefonanlage oder eines mit dem öffentlichen Netzt verbundenen Telefons oder der mindestens einen Nebenstelle oder eines mit dem öffentlichen Netzt verbundenen Telefons mit dem mindestens einen mobilen Telekommunikationsendgerät über ein Übertragungsprotokoll ein automatisierter Datenaustausch stattfindet.

Das Verfahren der eingangs genannten Art ist dadurch gekennzeichnet, dass die Kopplung der Telefonanlage oder eines mit dem öffentlichen Netzt verbundenen Telefons oder der mindestens einen Nebenstelle einer Telefonanlage oder eines mit dem öffentlichen Netzt verbundenen Telefons mit mindestens einem mobilen Telekommunikationsendgerät über zumindest ein Modul als zentrale Instanz realisiert wird, wobei dieses Modul ein Adapter, ein Dongle oder eine Dockingstation ist oder in ein Büro- bzw. Systemtelefon integriert ist, wobei bei Kopplung mit mindestens einem mobilen Telekommunikationsendgerät Daten der Vermittlungsschicht (Network Layer), der Transportschicht (Transport Layer), der Sitzungsschicht (Session Layer), der Darstellungsschicht (Presentation Layer) und/oder der Anwendungsschicht (Application Layer) eines OSI-Referenzmodells (D-Kanal bei ISDN Telefonen, SIP/ H323 bei VoIP -Telefonen, CoNet-T, CorNet-IP, ABC-F, Skinny, bei proprietären VoIP oder digitalen Systemtelefonen) an das mobile Telekommunikationsendgerät (z.B. drahtlos mit Bluetooth) übermittelt werden.

## Beschreibung

### Technisches Gebiet

Die Erfindung betrifft ein Verfahren zur Kopplung von Telefonanlagen (PBX) oder von mindestens einer Nebenstellen einer Telefonanlage (Telekommunikationsendgeräte, bspw. Festnetztelefon) oder eines mit dem öffentlichen Netzt verbundenen Telefons mit mindestens einem mobilen Telekommunikationsendgerät (bspw. Handy, Smartphone, IPad, Tablet), wobei bei Kopplung der Telefonanlage oder der mindestens einen Nebenstelle bzw. mit dem öffentlichen Netzt verbundenen Telefons mit dem mindestens einen mobilen Telekommunikationsendgerät über ein Übertragungsprotokoll ein automatisierter Datenaustausch stattfindet. Als öffentliches Netz sei nachstehend das öffentliche, leitungsgebundenen Telefonnetz (PSTN), das Next Generation Network (NGN) sowie Telefonanschlüsse über DSL, VDSL, ADSL, xDSL und Kabelfernsehen verstanden.

### Stand der Technik

Aus DE10141582A1 ist ein Verfahren zum Betrieb eines ortsfest installierten Telekommunikationsendgerätes und eines mobilen Telekommunikationsendgerätes bekannt, bei dem über ein angepasstes Protokoll Rufnummerneinträge des Nutzers miteinander abgeglichen werden können. Die Datenübertragung zwischen den Endgeräten erfolgt hierbei über das im DECT-Standard festgelegte Protokoll zum Datenaustausch, über I/O-Services des ECMA-Standards 218, über Bluetooth oder IR-Strecken.

Aus EP0849965A1 und GB2365266A sind Telefoneinrichtungen bekannt, bei welchen sich mittels einer (Dual Mode) Basisstation sowohl über ein vorhandenes Mobilfunk- als auch über das Festnetz-Telekommunikationsnetz telefonieren lässt, wobei durch das Ankoppeln einer Mobilstation in die (Dual Mode) Basisstation diese in die Lage versetzt wird, Mobilfunksignale zu empfangen, welche in DECT-Standard umgesetzt werden.

Aus DE4400832A1 ist ferner ein Dual Mode Telekommunikationsendgerät bekannt, welches ein Mobilfunk- und Festnetztelefon in einem Gerät vereint und es erlaubt, alternativ in beiden Netzen zu telefonieren.

Aus WO03/039112A1 ist schließlich eine stationäre Dockingstation für Mobiltelefone bekannt, welche eine Bedienung für ein Mobiltelefon aufweist, mittels der das Mobiltelfon im stationären Betrieb unter Bereitstellung zusätzlicher Funktionen einfach bedient werden kann. In DE10014677A1 ist die Verwendung eines Telefons als Handystation beschrieben, mit der Handy-Gespräche über das Tischtelefon geführt werden können.

Nachteilig bei den vorgenannten Systemen ist, dass sie grundsätzlich keine nahtlose Integration eines stationären Telekommunikationsendgerätes mit einem mobilen Telekommunikationsendgerät bereitstellen. Überall dort, wo bspw. Tischtelefone und Handys von einem Nutzer parallel betrieben werden, kommt es zu Situationen, in denen Daten eines Gerätes auf dem anderen Gerät benötigt werden und umgekehrt. Immer noch ist an einem festen Arbeitsplatz das Tischtelefon in punkto Telefoniekomfort erste Wahl. Häufig kommt es vor, dass Gespräche parallel ankommen oder während eines Gespräches ein weiteres an dem anderen Gerät signalisiert wird. Alle bisher bekannten Lösungen, ein stationäres Telekommunikationsendgerät mit einem mobilen Telekommunikationsendgerät zu koppeln, sind unproduktiv und ineffizient.

### Darstellung der Erfindung

Der vorliegenden Erfindung liegt die Aufgabe zu Grunde, ein Verfahren zur nahtlosen, logischen Kopplung zwischen einer Telefonanlage oder von mindestens einer Nebenstelle einer Telefonanlage mit mindestens einem mobilen Telekommunikationsendgerät zu schaffen.

Erfindungsgemäß wird die voranstehende Aufgabe mit den Merkmalen des Anspruchs 1 gelöst. Vorteilhafte Ausgestaltungen des erfindungsgemäßen Verfahrens sind in Unteransprüchen angegeben.

Danach ist ein Verfahren der eingangs genannten Art dadurch gekennzeichnet, dass die Kopplung der Telefonanlage oder der mindestens einen Nebenstelle einer Telefonanlage mit mindestens einem mobilen Telekommunikationsendgerät über zumindest ein Modul als zentrale Instanz realisiert wird, wobei dieses Modul ein Adapter, ein Dongle oder eine Dockingstation ist oder in ein Büro- bzw. Systemtelefon integriert ist, wobei bei Kopplung mit mindestens einem mobilen Telekommunikationsendgerät Daten der Vermittlungsschicht (Network Layer), der Transportschicht (Transport Layer), der Sitzungsschicht (Session Layer), der Darstellungsschicht (Presentation Layer) und/oder der Anwendungsschicht (Application Layer) eines OSI-Referenzmodells (D-Kanal bei ISDN Telefonen, SIP/ H323 bei VoIP -Telefonen, CoNet-T, CorNet-IP, ABC-F, Skinny, bei proprietären VoIP oder digitalen Systemtelefonen) an das mobile Telekommunikationsendgerät (z.B. drahtlos mit Bluetooth) übermittelt werden.

Sobald ein ggf. mit einer entsprechenden Software (App) ausgestattetes und konfiguriertes mobiles Telekommunikationsendgerät in die Nähe einer stationären Telefonanlage oder einer Nebenstelle gebracht wird, erfolgt eine ad-hoc-Kopplung der Telekommunikationsendgeräte. Beide Geräte zusammen fungieren gegenüber dem Nutzer dann als ein logisches Telekommunikationsendgerät.

Das mobile Telekommunikationsendgerät, das ggf. eine entsprechende Software (App) enthält, ist dann in der Lage, die übermittelten Daten zu interpretieren, auszuwerten, zu manipulieren oder mit weiteren Informationen anzureichern, um diese dann wieder an das Modul zu übertragen. Umgekehrt werden relevante Daten, wie z.B. die Signalisierung des GSM-Mobiltelefonens, an das Modul übertragen, um dort ebenfalls interpretiert und ausgewertet zu werden. Zum Beispiel können so Gespräche auf- und abgebaut oder Leistungsmerkmale aktiviert werden. Das Modul ist die zentrale Instanz zwischen einer PBX auf der einen Seite und einem GSM-Mobiltelefon und Bürotelefon auf der anderen Seite und so in der Lage, die komplexe Steuerung beider Endgeräte zu übernehmen.

Weiterhin ist auch eine Kommunikation von "normalen" Mobilfunktelefonen mit Bluetooth-Schnittstelle ohne zusätzliche Applikation (mit Bluetooth Bordmitteln) mit dem Modul möglich. Die Funktion beschränkt sich dann auf die Bluetooth-Profile:
- HSP - Headset Profile - Sprachausgabe per Headset,
- HFP - Hands Free Profile - schnurlose Telefonie im Auto,
- PBA, PBAP - Phonebook Access Profile Zugriff auf Telefonbuch (nur lesend),
- SAP, SIM, rSAP - SIM Access Profile Zugriff auf SIM-Karte.

Weiterhin sind auch Smartphones ohne spezielle APP in der Lage, mit dem erfindungsgemäßen Modul zu kommunizieren.

Die Funktionalität des Moduls beinhaltet die folgenden Komponenten:
- automatische Erkennung des mobilen Telekommunikationsendgeräts durch das stationäre Telekommunikationsendgerät;
- Wählen für das stationäre Telekommunikationsendgerät aus dem Telefonbuch bzw. den Kontakten des mobilen Telekommunikationsendgeräts;
- sämtliche Anrufe im Büro können auf einem Gerät (Bürotelefon oder Handy) gebündelt werden;
- Anzeige des Anrufers gleichzeitig auf mobilem und stationärem Telekommunikationsendgerät;
- Aufbau von ausgehenden Telefonverbindungen für das stattionäre Telekommunikationsendgerät vom mobilen Telekommunikationsendgerät aus;
- Aufbau von ausgehenden Telefonverbindungen für das mobile Telekommunikationsendgerät vom stationären Telekommunikationsendgerät aus;
- Annahme von kommenden Mobilfunkanrufen am stationären Telekommunikationsendgerät;
- Annahme von kommenden Bürotelefonanrufen am mobilen Telekommunikationsendgerät;
- das mobile Telekommunikationsendgerät ist unter der Nebenstellennummer intern/extern (Telefonanlagen Durchwahlnummer) erreichbar;
- Realisierung eines "OneNumber" Services im Unternehmen für die mobilen Mitarbeiter;
- automatische Anrufeinstellungen fest -> mobil bzw. mobil -> fest;
- freie Wahl des jeweils günstigsten Telefonnetzes (Least Cost Routing, d.h. Entscheidung ob Fest- oder Mobilfunknetz für auszuführendes Gespräch gewählt wird);
- Nutzung der Funktionen der Telefonanlage (z.B. Konferenz, Makeln, Anrufumleitung, Rückfrage, Anruferliste, Musik on Hold, uvm.) am mobilen Telekommunikationsendgerät;
- die Leistungsmerkmale der Telefonanlage können über die Touchscreen Oberfläche des mobilen Telekommunikationsendgeräts aktiviert, eingeleitet oder gesteuert werden;
- auf dem mobilen Telekommunikationsendgerät können nahezu beliebig viele Funktionstasten des Tischtelefons emuliert werden;
- Tasten auf dem stationären Telekommunikationsendgerät können Aktionen auf dem mobilen Telekommunikationsendgerät starten;
- über eine "Steckdose" des Moduls kann das mobile Telekommunikationsendgerät aufgeladen werden.

Durch den Einsatz des Moduls kann das Büro-/Tischtelefon auch komplett entfallen; d.h. das Modul zusammen mit dem mobilen Telekommunikationsendgerät agiert dann als Nebenstelle der Telefonanlage. Das mobile Telekommunikationsendgerät kann die gesamte Funktionalität des Tischtelefons abbilden und ist lediglich über Bluetooth mit dem Modul verbunden.

Das Telefonbuch des mobilen Telekommunikationsendgeräts kann in das Modul übertragen und dann aus den Geräten heraus verwendet werden, ohne das danach ein mobiles Telekommunikationsendgerät angeschlossen sein muss.

Die Vorteile der Erfindung betreffen:
- die Senkung der Kommunikationskosten durch Nutzung des jeweils günstigsten Netzes bei Anwesenheit der Mitarbeiter im Büro (durch Tarifunterschiede in Festnetz oder Mobilnetz);
- einen erhöhten Bedienkomfort durch Kombination der bereits im Unternehmen vorhandenen Telefonanlage (und Festnetz Telefonanschlusses bzw. -services) mit der mobilen Infrastruktur (Handys und Mobilnetz bzw. -services);
- eine Senkung der Kosten für Telefonanlagen-Infrastruktur durch Nutzung des "mobile2office" Moduls mit einem mobilen Telekommunikationsendgerät anstelle des bisherigen stationären Telekommunikationsendgeräts;
- eine einfache Erweiterung der vorhandenen Telefonanlage um Nebenstellen durch logische Anbindung von mobilen Telekommunikationsendgeräten über das erfindungsgemäße Modul;
- eine Vereinfachung der Kommunikation und verbesserte Erreichbarkeit intern/extern durch Realisierung eines "OneNumber" Services.

### Kurzbeschreibung der Zeichnungen

Weitere Ziele, Merkmale, Vorteile und Anwendungsmöglichkeiten des erfindungsgemäßen Verfahrens ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen

Fig.1 ein Beispiel für eine Implementierung;

Fig.2 ein weiteres Beispiel für eine Implementierung;

Fig.3 ein drittes Beispiel für eine Implementierung;

Fig.4 schaubildlich die Initialisierung des Verfahrens;

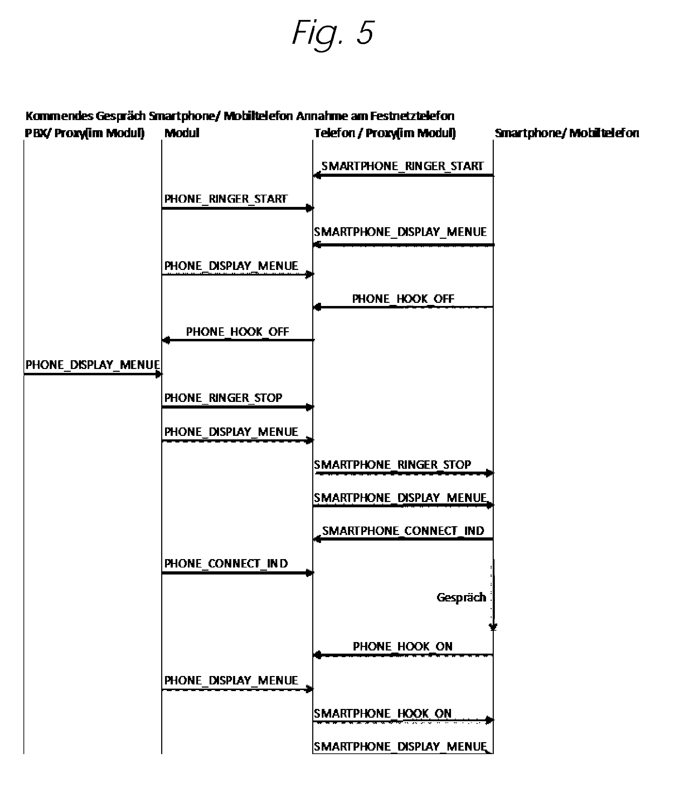

Fig.5 schaubildlich ein ankommendes Gespräch am mobilen Telekommunikationsgerät;

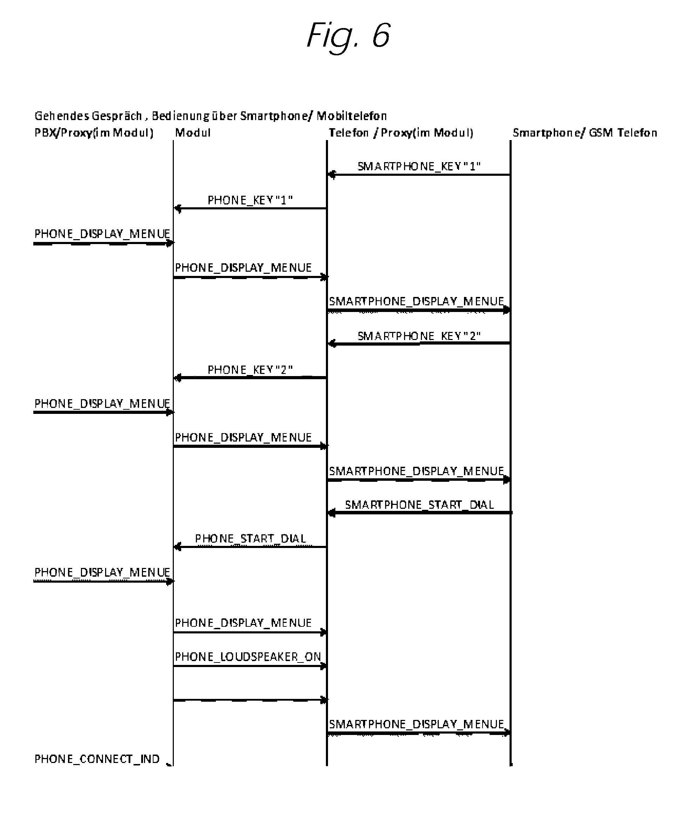

Fig.6 schaubildlich ein ausgehendes Gespräch mittels des mobilen Telekommunikationsgeräts;

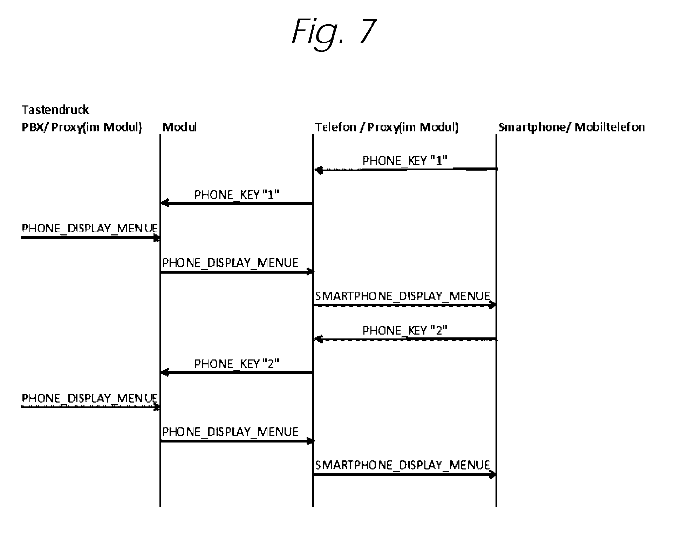

Fig.7 schaubildlich einen Tastendruck.

### Ausführung der Erfindung

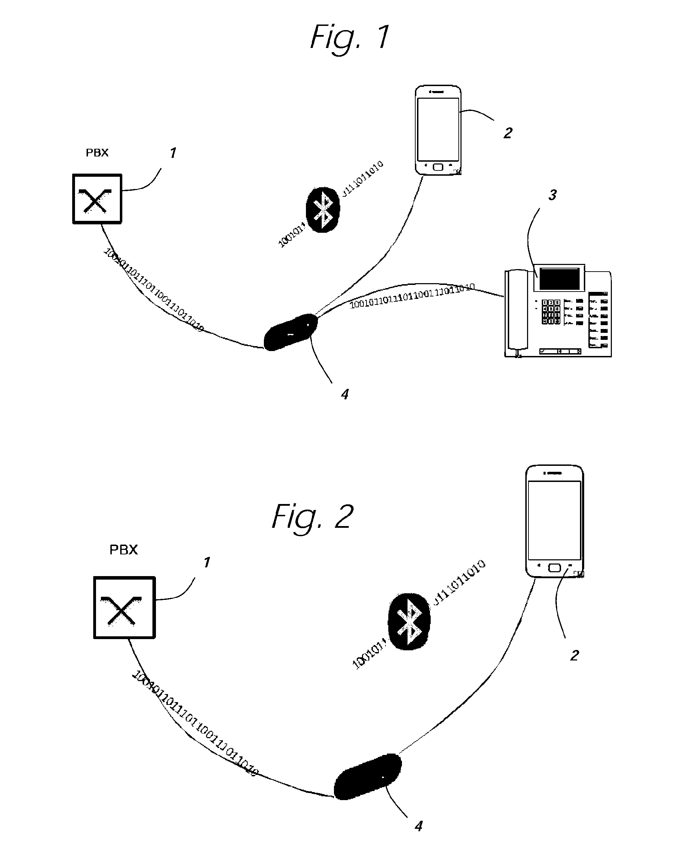

Die in Fig.1 dargestellte vorteilhafte Ausführung zeigt ein Beispiel für eine Implementierung. Durch die Implementierung der Systemschnittstelle mit erweitertem Protokoll kann das Modul 4 als Verbindungseinheit den schnellen und einfachen Zugang zu den vielfältigen Leistungsmerkmalen einer Telefonanlage 1 gewährleisten. Beide Geräte 2,3 fungieren als eine logische Einheit.

Fig.2 zeigt ein weiteres Beispiel für eine Implementierung. Durch die Implementierung der Systemschnittstelle mit erweitertem Protokoll kann das Modul den schnellen und einfachen Zugang zu den vielfältigen Leistungsmerkmalen einer Telefonanlage gewährleisten, ohne, dass ein stationäres Telekommunikationsendgerät 3 involviert ist.

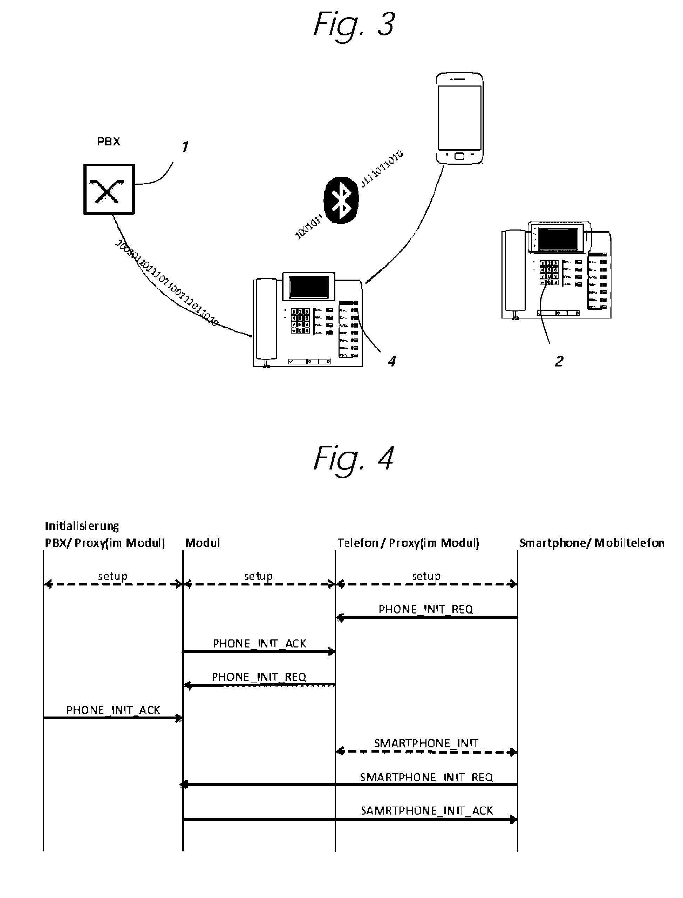

Fig.3 zeigt ein drittes Beispiel für eine Implementierung. Durch die Implementierung der Systemschnittstelle mit erweitertem Protokoll wird der Zugang zu den vielfältigen Leistungsmerkmalen über ein Tischtelefon mit integriertem Modul gekoppelten GSM-Mobiltelefon gewährleistet. Das Modul 4 ist in diesem Fall in das Endgerät integriert.

### Liste der Bezugsziffern

- 1: Telefonanlage
- 2: mobilen Telekommunikationsgerät
- 3: stationäres Telekommunikationsgerät
- 4: Modul, Dongle (Fig.1 und Fig.2) oder integriert in ein stationäres Telekommunikationsgerät (Fig.3)

## Patentansprüche

1. Verfahren zur Kopplung von Telefonanlagen oder eines mit dem öffentlichen Netzt verbundenen Telefons oder von mindestens einer Nebenstellen einer Telefonanlage oder eines mit dem öffentlichen Netzt verbundenen Telefons mit mindestens einem mobilen Telekommunikationsendgerät, wobei bei Kopplung der Telefonanlage oder eines mit dem öffentlichen Netzt verbundenen Telefons oder der mindestens einen Nebenstelle oder eines mit dem öffentlichen Netzt verbundenen Telefons mit dem mindestens einen mobilen Telekommunikationsendgerät über ein Übertragungsprotokoll ein automatisierter Datenaustausch stattfindet,
**dadurch gekennzeichnet, dass**
die Kopplung der Telefonanlage oder eines mit dem öffentlichen Netzt verbundenen Telefons oder der mindestens einen Nebenstelle einer Telefonanlage oder eines mit dem öffentlichen Netzt verbundenen Telefons mit mindestens einem mobilen Telekommunikationsendgerät über zumindest ein Modul als zentrale Instanz realisiert wird,
wobei dieses Modul ein Adapter, ein Dongle oder eine Dockingstation ist oder in ein Telefon oder ein Büro- bzw. Systemtelefon integriert ist,
wobei bei Kopplung mit mindestens einem mobilen Telekommunikationsendgerät Daten der Vermittlungsschicht, der Transportschicht, der Sitzungsschicht, der Darstellungsschicht und/oder der Anwendungsschicht eines OSI-Referenzmodells an das mobile Telekommunikationsendgerät übermittelt werden.

2. Verfahren nach Anspruch 1,
**dadurch gekennzeichnet, dass**
eine automatische Erkennung des mobilen Telekommunikationsendgeräts durch das stationäre Telekommunikationsendgerät erfolgt und eine Anzeige des Anrufers gleichzeitig auf mobilem und stationärem Telekommunikationsendgerät erfolgt, wobei vorzugsweise sämtliche Anrufe auf einem Gerät gebündelt werden können.

3. Verfahren nach den Ansprüchen 1 und 2,
**dadurch gekennzeichnet, dass**
ein Aufbau von ausgehenden Telefonverbindungen für das stationäre Telekommunikationsendgerät vom mobilen Telekommunikationsendgerät und/oder ein Aufbau von ausgehenden Telefonverbindungen für das mobile Telekommunikationsendgerät vom stationären Telekommunikationsendgerät aus möglich sind, und dass ferner
eine Annahme von kommenden Mobilfunkanrufen am stationären Telekommunikationsendgerät und/oder eine Annahme von kommenden Bürotelefonanrufen am mobilen Telekommunikationsendgerät vorgesehen sind.

4. Verfahren nach einem der vorangegangenen Ansprüche,
**dadurch gekennzeichnet, dass**
das mobile Telekommunikationsendgerät unter der Nebenstellennummer intern/extern erreichbar ist.
